# EUROPEAN PATENT APPLICATION

(11) **EP 2 567 945 A2**
(43) Date of publication of application: **13.03.2013**
(21) Application number: 12183047.5
(22) Date of filing: 05.09.2012
(51) Int. Cl.: C03B 40/00, D03D 15/12, D03D 1/00, D03D 15/08

(54) **Fabrics for the production of mirrors**

(30) Priority: 09.09.2011 BE 201100533
(71) Applicant: NV Bekaert SA, 8550 Zwevegem (BE)
(72) Inventor: D Ridder, Frank, 9308 Hofstade - Aalst (BE); Platteau, Chris, 8560 Moorsele (BE)

(57) **Abstract**

The invention describes fabrics suited for covering a male mold for the bending of glass, e.g. mirror glass. The fabric comprises weft yarns and warp yarns. The weave between the weft yarns and the warp yarns is a satin weave. The warp yarns and/or the weft yarns comprise stainless steel fibers of discontinuous length. The stainless steel fibers of discontinuous length are incorporated in the yarn by means of a twisting operation. The air permeability of the fabric is between 600 and 1500 liter/(dm2* min), wherein the air permeability is measured using an under pressure of 100 bar.

## Description

### Technical field

The invention relates to fabrics that can e.g. be used as covering for the male bending mold in the production of bent mirror glass. Bent mirrors are e.g. used in cars and trucks, and also as solar mirrors. The fabric can also be beneficially used as carrier fabric for transporting hot glass, e.g. for solar glass.

### Background art

Bent mirror glass is made in furnaces where a bending force is exerted onto the mirror glass. Textile fabrics are used as carrier for the mirror glass and as covering for the mold with which the mirror glass is bent. Such textile fabrics are required to protect the mold e.g. to resist the high furnace temperature.

The major aspect of optical quality that is relevant for bent mirrors is reflection of objects that appear in the bent mirror. Such objects have to be reflected without distortion. Distortion can occur due to local defects on the surface of the mirror. The test method frequently used, is the determination of the reflection. By projecting a grid onto the bent mirror, it is possible - by observing if distortion of the reflected lines of the grid occur - to detect whether or not waviness occurs. It is rather a relative test method. Standards are used to indicate the quality of the bent mirror.

Requirements for the optical quality of bent mirrors is ever increasing, e.g. for side and rear view mirrors of cars and truck. Increasing use is made of icon projecting in side and rear view mirrors of cars and trucks (speed warning, direction indication...). The optical quality is important as well for safety: a mirror with excessive waviness can provide an incorrect perception of the distance of a car; the waviness can even be increased by the coating layer on the bent mirror glass. Traditionally, fabrics made out of continuous glass fibers are used in the production of bent mirror glass because of the good optical quality of mirror glass made this way. Drawback of such fabrics made out of continuous glass fibers is the low lifetime, for instance only four hours. Therefore the textile fabrics need to be replaced frequently. The consequence is high downtime of the production lines and the high associated costs.

Certain fabrics made out of stainless steel fibers or that are comprising stainless steel fibers have already been tested in bent mirror glass production. Their drawback is the bad optical quality of the bent mirrors made with it.

Knitted fabric has been tested as well, but have as drawback compared to woven fabrics the lower lifetime of the fabric and worse optical quality (distortion in reflection) of the bent mirrors and a marking of the glass known as pitting.

### Disclosure of the invention

It is an objective of the invention to provide fabrics that comprise stainless steel fibers and that are suited as textile fabric in the production of bent mirror glass of good optical quality and wherein the textile fabrics have a long lifetime.

The first aspect of the invention relates to woven fabrics suited for covering a male mold for the bending of glass, e.g. mirror glass. The fabric comprises weft yarns and warp yarns. The weave between the warp yarns and the weft yarns in the fabric is a satin weave. The warp yarns and/or the weft yarns comprise stainless steel fibers of discontinuous length; wherein the stainless steel fibers of discontinuous length are incorporated in the warp yarn and/or in the weft yarn by means of a twisting operation. The air permeability of the fabric is between 600 and 1500 liter/(dm² * min).

Such fabrics result in a good optical quality of the bent mirror glass and show a long lifetime in the bent mirror glass production process. The good optical quality and long lifetime are achieved by means of an interactive and synergetic combination of the fabric weave, use of stainless steel fibers with discontinuous length incorporated in the weft and/or warp yarns by means of twisting and by the value for the air permeability.

Such fabrics also show excellent results in terms of optical quality of the produced glass when used as carrier fabrics (e.g. as cover fabric for the carrying system that transports hot solar glass in a furnace or at or after the exit of the furnace) in the production of hot solar glass.

Solar glass is a specific type of glass that is printed after producing it and used e.g. for the production of solar cells. The quality requirements for solar glass, especially the surface quality, are extremely high. The fabrics according to the invention allow to reach the high quality requirements of solar glass.

For this invention, the air permeability of fabrics is measured on a circular test sample of 20 cm² at an under pressure of 100 Pa, and with commercial test apparatuses, as known by persons skilled in the art. The test is performed according to the international standard ISO 9237:1995 "Determination of permeability of fabrics".

Preferably, the air permeability is between 600 en 1000 liter/(dm²*min). In specific production processes of bent mirrors, perforated molds covered with a textile fabric are used. The mirror glass is sucked onto the covered mold through suction through the perforated mold. Therefore, a sufficiently high air permeability of the textile fabric covering the mold is required. An insufficient air permeability can result in it that the mirror glass is not sufficiently held onto the mold and is getting loose from the mold. An excessive air permeability could deform the mirror glass too much and could visualize the vacuum holes of the mold in the mirror glass, which would obviously be a defect in the mirror glass.

It is not advised to incorporate polymeric fibers in fabrics according to the invention. Therefore, preferred fabrics are devoid of polymeric fibers, also meaning devoid of aramid fibers (whether para- or meta- aramid) and devoid of PBO fibers (poly p-phenylene-2,6-benzobisoxazale fibers). The problem with polymeric fibers (even with so-called high temperature resistant polymeric fibers such as aramids and PBO-fibers) is that they have a negative effect on the lifetime of the fabric, especially if the fabric is used at higher temperature (e.g. PBO can only be used up to 450°C use temperature). Polymeric fibers can be sensitive to light and to humidity as well, which is having negative consequences for the fabric, e.g. depending on the storage conditions of the fabric. It is an objective of the invention to combine good optical quality of bent mirror glass with long lifetime of the fabric.

Preferably, the fabric of the invention comprises at least 50% by weight of stainless steel fibers, preferably at least 65% by weight stainless steel fibers. It is a benefit of such fabrics that a good optical quality is obtained combined with an even longer lifetime.

If the fabric is not a 100% stainless steel fabric, than preferably, the non-stainless steel fiber part of the fabric is comprising, and even more preferably consisting of, non-metallic inorganic fibers. With non-metallic inorganic fibers is meant fibers that are inorganic and non-metallic and comprise oxides and/or silicates. Examples of such fibers are glass fibers (e.g. E-glass, S-glass...), basalt fibers, silica fibers and ceramic fibers.

In an example, the fabric comprises 75% by weight of stainless steel fibers and 25% by weight of glass fibers.

Most preferred however, because of superior lifetime, is a 100% stainless steel fabric.

In a preferred embodiment fabrics with as weave satin 5 or satin 8 are used. Satin weaves with 5 or with 8 warp and weft yarns in the repeat (satin 5 and satin 8 respectively) are preferred because the length of floating yarns in the weave is limited. This is beneficial in weaving, certainly when the weft yarns have a certain elasticity.

In a preferred embodiment, the warp yarns are comprising stainless steel fibers and the warp yarn has a linear density between 20/2 Nm and 5/2 Nm, or a linear density between 20/1 Nm and 5/1 Nm.

Preferably the warp yarn is consisting out of 100% stainless steel fibers. A 100% stainless steel yarn in warp further increases the lifetime of the fabric. For instance a 11/2 Nm 316L stainless steel fiber yarn with a twist between 123 and 136 turns per meter and preferably with a warp density of 18 ends per centimeter can be used.

The metric yarn count (Nm) of yarn is used in textile industry and indicates the linear density of yarn. The metric yarn count indicates the length of yarn in meter that is having a mass of 1 gram; Nm is this meter of yarn per gram. Thus 1 m length of a yarn of 1 Nm (or Nm 1 as frequently noted in textile industry) has a mass of 1 gram. In textile industry "tex" is also used to indicate the linear density of a yarn. The tex of a yarn is determined as the weight in gram of a yarn of 1 km length. Tex is gram/km. The conversion from Nm to tex is obtained as follows: the linear density in tex is equal to 1000 divided by the linear density in Nm.

The metric yarn count (Nm) of plied yarns is frequently indicated as X/Y Nm. X is the metric yarn count (Nm) of the single yarn; Y is the number of such single yarns (with a single yarn is meant a ply in the multiply yarn) that are plied/ twisted together to obtain the plied yarn. The metric yarn count of the plied yarn is X/Y. For instance 20/3 Nm means that 3 yarns of linear density 20 Nm each are plied and twisted together. The linear density of the plied yarn is 20/3 Nm or 6.66 Nm (equal to 150.15 tex).

In a preferred embodiment, the warp density of the fabric is between 10 and 40 ends per centimeter. Even more preferred is a warp density between 15 and 25 ends per centimeter. Finer warp yarns can be used in combination with higher warp density. Using finer warp yarns higher warp densities results in more stable fabrics.

In a preferred embodiment, the weft density of the fabric is between 10 and 40 picks per centimeter. Even more preferred is a weft density between 15 and 25 picks per centimeter. As an example a fabric with a weft density of 18 picks per centimeter can be mentioned.

In combination with higher weft densities, finer weft yarns can be used. Using finer weft yarns higher weft densities lead to more stable fabrics.

In a preferred embodiment, the weft yarn is comprising stainless steel fibers and glass fibers, e.g. E-glass fibers or S-glass fibers.

In a preferred embodiment, the weft yarn is a spun yarn comprising stainless steel fibers and the weft yarn is a single yarn with a linear density between 20/1 Nm and 5/1 Nm.

Preferably, the weft yarn consists out of 100% stainless steel fibers. For instance a 100% stainless steel fiber yarn 316L of linear density 15/1 Nm with a twist between 160 and 180 turns can be used. A 100% stainless steel yarn is weft is beneficial for further increase of the lifetime of the fabric.

In another embodiment, the weft yarn is a plied double yarn consisting out of spun yarns, wherein the spun yarns are comprising stainless steel fibers and wherein the weft yarn has a linear density between 20/2 Nm and 5/2 Nm.

Preferably such weft yarns consists for 100% out of stainless steel fibers, which is beneficial for the lifetime of the fabric. The use as weft yarns of a plied yarn (and preferably consisting out of two single yarns twisted together) comprising stainless steel fibers provided a better optical quality compared to the use of a similar single yarn used as weft yarn. A plied double yarn - especially such a yarn with twist in ply twisting in the other direction compared to the twist given when spinning the single yarns - provides a less lively yarn, and as a result weaving such a yarn as weft yarn is facilitated.

According to another embodiment the warp yarn and/ or the weft yarn is a yarn comprising at least three fiber bundles, wherein at least one of the fiber bundles comprises stainless steel fibers. Each of the fiber bundles has an equivalent bundle diameter and the equivalent bundle diameters of each of the fiber bundles in the yarn differ at the most 40%. With equivalent bundle diameter is meant the diameter of a round bar that is having the same cross sectional surface as the cross section of the fiber bundle. A benefit of this embodiment of the invention is the even better optical quality of the bent mirror glass, thanks to the more homogeneous surface of such fabrics. Preferably, such yarn of such embodiment is produced twisting the fiber bundles individually in a first direction and twisting the fiber bundles together (ply twisting) in the opposite direction.

According to an embodiment, the weft yarn is a twisted three ply yarn, comprising spun yarns, wherein the spun yarns comprise stainless steel fibers and wherein the linear density of the weft yarn is between 30/3 Nm and 8/3 Nm.

More preferably such weft yarns consists for 100% out of stainless steel fibers, which is beneficial for the lifetime of the fabric. Fabrics with a three ply yarn as weft yarn provide an even better optical quality of the bent mirror glass than two ply yarns. The lifetime of the fabric is also higher than when using a two ply yarn as weft yarns. For instance a weft yarn with linear density 15/3 Nm made out of 100% stainless steel fibers AISI 316L with 105 turns per meter ply twist can be used.

In a specific embodiment the warp yarns comprise stainless steel fibers and the weft yarn is comprising or consisting out of non-metallic inorganic fibers. The weft yarn can be a spun or plied glass yarn or a spun or plied ceramic yarn. The use of a fabric wherein the warp yarns comprise stainless steel fibers and wherein the weft yarn is consisting out of non-metallic inorganic fibers (e.g. a spun or a plied glass yarn - e.g. an E-glass yarn or an S-glass yarn - or wherein the weft yarn is a spun or plied ceramic yarn - e.g. a yarn spun from ceramic fibers), provides an even better optical quality of the bent mirror glass. Especially when the side of the fabric with predominantly weft yarns is used in contact with the mirror glass during bending it. An example of a plied glass yarn that can be used as weft yarn is a 22*2 tex spun glass yarn.

In a specific embodiment the weft yarn is a plied yarn wherein the single yarns of the weft yarn comprises at least one glass yarn or ceramic yarns and at least one yarn comprising stainless steel fibers. The use of such weft yarn results in an even better optical quality, e.g. compared to when using a 100% stainless steel fiber weft yarn. An example of such a weft yarn is obtained by twisting with 105 turns per meter an E-glass yarn 2*22 tex (meaning itself also a plied yarn) together with a 11/1 Nm spun yarn made out of stainless steel fibers 316L. Alternatives for E-glass yarn are for instance S-glass yarn of other types of glass yarns. Ceramic yarns are yarns comprising ceramic fibers and can be used in this embodiment as well, e.g. replacing the glass yarn.

Preferably the fabric according to the invention has a thickness higher than 0.4 mm, more preferably higher than 0.5 mm and preferably below 0.8 mm. Such fabrics have shown to have specifically good performance when used as covering for the male mold in bending mirror glass, as an optimum combination of performance (taking into account heat transfer properties, ease of mounting and suitable deformability) and durability of the fabric is obtained.

The second aspect of the invention is the use as heat resistant separation material of fabrics according to the first aspect of the invention. A specific example is the use of such fabrics as heat resistant separation materials in the production of bent mirror glass. Fabrics according to the invention can be used as cover for the carriers of the mirror glass or as cover of the molds, for instance of the molds that bend the mirror glass in the production of the bent mirror glass. Preferably, the side of the fabric with predominantly weft yarns is brought in contact with the hot mirror glass. Such mirrors are e.g. used in automotive applications (cars, trucks...) and in solar mirrors (solar glass). Preferential use is in such applications where the oven temperature is more than 500°C, as other types of fabrics will show low lifetime in such applications and/or low quality of the produced glass.

Another use of the fabric of the first aspect of the invention is as cover fabric for the carrying system that transports hot solar glass in a furnace or at or after the exit of the furnace. Preferred is when the solar glass is on one of its sides supported over its full surface by the fabric of the first aspect of the invention. Solar glass is a specific type of glass that is e.g. printed afterwards and used for the production of solar cells. The quality requirements for solar glass, especially the surface quality, are extremely high. The fabrics according to the invention allow to reach the high quality requirements of the solar glass.

An example of such use of the fabric in solar glass production is as conveyer belting fabric. When the fabric of the first aspect of the invention is used in the production of solar glass, preferably the side of the fabric that predominantly shows weft yarns is in contact with the hot solar glass.

Different stainless steel alloys can be used for stainless steel fibers used in the invention. Example are AISI 316, AISI 316L, AISI 347, or other alloys of the AISI 300 type. AISI-400 alloys or aluchrome alloys can be used as well. The fibers can be produced via bundled drawing, as e.g. described in U.S. 3,379,000, via shaving as e.g. described in U.S. 4,930,199 or via extrusion from a metal melt. Fibers can also be produced as described in U.S. 4,220,112. Bundles of fibers of continuous length can be stretch broken prior to using the fibers to produce a yarn by inserting twist.

For the invention, stainless steel fibers of equivalent diameter between 1 and 100 µm are used, even more preferably between 6 en 25 µm. With equivalent diameter of fibers is meant the diameter of a circle that is having the same surface area as the cross section of the fiber. The cross section of the fiber can have a complex shape, e.g. polygonal, caused by the method of production of the fibers.

It has to be understood that features of different embodiments and examples of the first aspect of the invention and/or of the second aspect of the invention can be combined, whereby the obtained embodiments are part of and covered by the invention.

### Brief description of figures in the drawings

Figure 1 shows an example of a production process for bent mirrors.
Figure 2 shows in side view an example of a three ply yarn that can be used as weft yarn in a fabric according to the invention
Figure 3 shows the repeat of a satin 5 weave with step 2
Figure 4 shows the repeat of a satin 5 weave with step 3
Figure 5 shows the repeat of a satin 8 weave with step 3
Figure 6 shows a Turks satin, an example of a broken satin weave.

### Modes for carrying out the invention

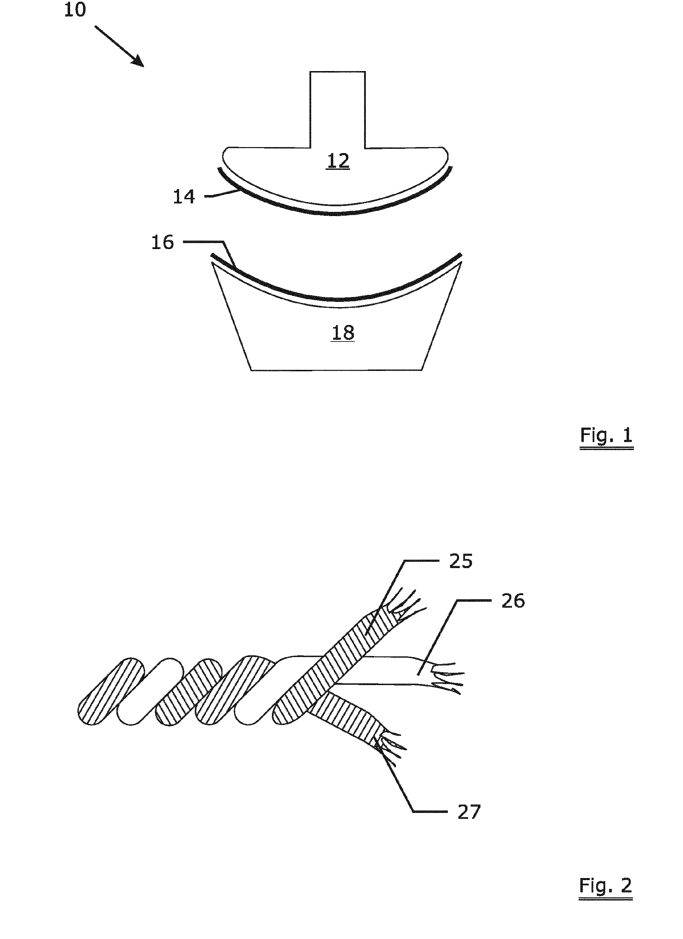

Figure 1 shows an example of a production process 10 for bent mirrors. A mold 12 is covered with a fabric 14. Fabrics according to the invention are preferably used. The mirror glass 16 lies on a ring 18 and is bent on the ring.

Figure 2 shows an example of a three ply yarn that can be used as weft yarn in the woven fabric. The three ply yarn consists out of three yarns 25, 26 en 27 which are twisted together. A first yarn 25 consists for 100% out of stainless steel fibers, whereas the other two yarns 26 and 27 are for instance for 100% consisting out of another heat resistant fiber (e.g. E-glass, S-glass, ceramic fibers...), or comprise a blend of two or more heat resistant fiber types. The types of heat resistant fibers that can be used in the different single yarns 26 and 27, are not necessary the same, and the compositions are also not necessarily the same. The yarns 26 and 27 can be multifilament yarns or spun yarns, e.g. rotor or open-end spun yarns, or ring spun yarns.

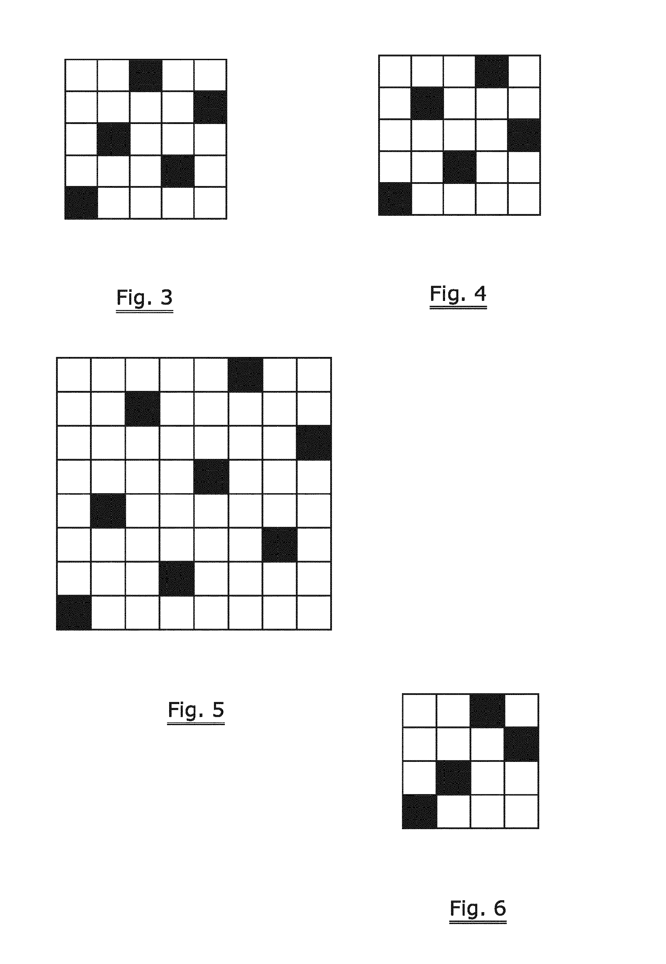

Figures 3 to 9 show the repeats of satin weaves that can be used in the invention. The repeat is the smallest unit of the fabric that shows the way of crossing of weft and warp yarns in the fabric, and that when repeated, shows the complete fabric. The warp yarns are running vertically, the weft yarns are running horizontally. According to the convention for the representation of the repeat, a black square indicates that a warp yarn crosses over a weft yarn; a white square indicates that the weft yarn is crossing over the warp yarn. The step indicates the number of weft yarns over which the cross over point (this is where a warp yarn crosses over a weft yarn) moves from one warp yarn to the next warp yarn in the repeat.

Figure 3 shows the repeat of a satin 5 weave with step 2. With 5 is indicated that the repeat includes 5 weft yarns and 5 warp yarns.

Figure 4 shows the repeat of a satin 5 weave with step 3. With 5 is indicated that the repeat includes 5 weft yarns and 5 warp yarns.

Figure 5 shows the repeat of a satin 8 weave with step 3. With 8 is indicated that the repeat includes 8 weft and 8 warp yarns.

Figure 6 shows the repeat of a Turks satin, which is an example of a broken sating with a repeat 4.

A first example of a fabric according to the invention has the following characteristics:
- Warp yarn 11/2 Nm (with between 240 to 300 turns per meter twist of the single yarn and with between 123 up to 136 turns per meter twist in Z-direction in ply twisting) 100% stainless steel fibers AISI 316L, warp density 18 ends per centimeter
- Weft yarn 15/2 Nm 100% stainless steel fibers AISI 316L, weft density 18 ends per centimeter
- Weave: satin 8, in use the side with predominantly weft yarns is in contact with the mirror glass. This satin 8 is a repeat with 8 warp and 8 weft yarns in its repeat and step 3.
- Weight of the fabric: 616 g/m²
- Thickness of the fabric: 0.60 mm
- Air permeability of the fabric: 870 I/(dm²*min)

The result of this fabric in the production of bent mirrors was a good optical quality and a long lifetime of the fabric, much longer than the lifetime of fabrics made out of glass yarns.

A second example of a fabric according to the invention has the following characteristics:
- Warp yarn 11/2 Nm (with between 240 and 300 turns per meter twist in S-direction in spinning the single yarns and with between 123 and 136 turns per meter ply twist in Z direction) 100% stainless steel fibers AISI 316L, warp density 18 ends per centimeter
- Weft yarn 15/3 Nm 100% stainless steel fibers AISI 316L, weft density 18 picks per centimeter
- Weave: satin 8, in use the side of the fabric showing predominantly weft yarns is in contact with the mirror glass.
- Fabric weight: 718 g/m²
- Thickness of the fabric: 0.64 mm
- Air permeability of the fabric: 627 I/(dm²*min)

The result of this fabric in the production of bent mirrors was a good optical quality and a long lifetime, better than for the first example.

A third example of a fabric according to the invention has the following characteristics:
- Warp yarn 11/2 Nm (with single yarn of 240 to 300 turns per meter twist S-direction and with 123 to 136 turns per meter in Z-direction in ply twisting) 100% stainless steel fibers AISI 316L, warp density 18 ends per centimeter
- The weft yarn is a hybrid yarn, wherein a 22*2 tex E-glass yarn is twisted together with a 11/1 Nm 100% stainless steel fiber AISI 316L yarn. The twist in ply twisting is 105 turns per meter. The weft density is 18 picks per centimeter
- Weave: satin 8, in use the side with predominantly weft yarns is in contact with the mirror glass.
- Fabric weight: 623 g/m²
- Thickness of the fabric: 0.57 mm
- Air permeability of the fabric: 641 I/(dm²*min)

The result was an even better optical quality of the bent mirror glass compared to the first and the second example. The lifetime was significantly better than with glass fabrics, but lower than for example 1 and example 2.

A fourth example of a fabric according to the invention has the following characteristics:
- Warp yarn 11/2 Nm (with 240 to 300 turns per meter twist in S-direction in spinning the single yarn and with 123 to 136 turns per meter twist in Z-direction in ply twisting) 100% stainless steel fibers AISI 316L, warp density 18 ends per centimeter
- The weft yarn is a plied E-glass yarn 22*2 tex. The weft density is 18 picks per centimeter
- Weave: satin 8, in use the side with predominantly weft yarns is in contact with the mirror glass.
- Fabric weight: 434 g/m²
- Thickness of the fabric: 0.52 mm
- Air permeability of the fabric: 860 I/(dm²*min)

The result was a good optical quality, comparable to example 3. The lifetime was better than when using glass fabrics, but less good than when using example 2 and 3.

## Claims

1. Fabric suited for covering a male mold for the bending of glass, e.g. mirror glass,
wherein said fabric comprises weft yarns and warp yarns,
wherein in the fabric the weave between the weft yarns and the warp yarns is a satin weave,
and wherein said warp yarns and/or said weft yarns comprise stainless steel fibers of discontinuous length; and wherein the stainless steel fibers of discontinuous length are incorporated in the yarn by means of a twisting operation;
and wherein the air permeability of the fabric is between 600 and 1500 liter/(dm²*min), wherein the air permeability is measured using an under pressure of 100 bar.

2. Fabric as in claim 1, wherein the fabric comprises at least 50% by weight stainless steel fibers.

3. Fabric as in any of the preceding claims, wherein the satin weave is a satin 5 or a satin 8.

4. Fabric as in any of the preceding claims, wherein the warp yarns comprise stainless steel fibers and wherein the warp yarns have a linear density between 20/2 Nm and 5/2 Nm, or a linear density between 20/1 Nm and 5/1 Nm.

5. Fabric as in any of the preceding claims, wherein the warp density is between 10 and 40 ends per centimeter and/or wherein the weft density is between 10 and 40 picks per centimeter.

6. Fabric as in any of the preceding claims, wherein the weft yarns are three-ply yarns, wherein the single yarns making up the three ply yarns are spun yarns and wherein the single yarns comprise stainless steel fibers and wherein the weft yarns have a linear density between 30/3 Nm and 8/3 Nm.

7. Fabric as in any of the claims 1 to 5, wherein the weft yarns are spun yarns comprising stainless steel yarns and wherein the weft yarns are single yarns with a linear density between 20/1 Nm and 5/1 Nm.

8. Fabric as in any of the claims 1 to 5, wherein the weft yarns are two ply yarns, wherein the single yarns of said two ply yarns comprise stainless steel fibers and wherein the weft yarns have a linear density between 20/2 Nm and 5/2 Nm.

9. Fabric as in any of the preceding claims, wherein the warp yarns and/or the weft yarns are yarns comprising at least three fiber bundles, and wherein at least one of the fiber bundles is comprising metal fibers, and wherein each of the fiber bundles has an equivalent bundle diameter and wherein the equivalent bundle diameter of each of the fiber bundles in the yarn differ less than 40%.

10. Fabric as in any of the preceding wherein the weft yarns are comprising stainless steel fibers and glass fibers.

11. Fabric as in any of the claims 1 to 6, wherein the weft yarns are comprising non-metallic inorganic fibers, e.g. wherein the weft yarns are plied yarns that comprise as single yarn at least one glass yarn or ceramic yarns, and at least one yarn that comprises stainless steel fibers.

12. Fabric as in any of the claims 1 to 5, wherein the warp yarns comprise stainless steel fibers and wherein the weft yarns are spun or twisted glass yarns or are spun or twisted ceramic yarns.

13. Use of a fabric as in any of the claims 1 to 12 as heat resistant separation material.

14. Use of a fabric as in any of the claims 1 to 12 as heat resistant separation material in the production of bent mirror glass or in the production of solar glass.

15. Use of a fabric as in claim 14, wherein the side of the fabric that predominantly shows weft yarns is in contact with the hot mirror glass or with the hot solar glass.
